# EUROPEAN PATENT APPLICATION

(11) **EP 4 741 240 A1**
(43) Date of publication of application: **13.05.2026**
(21) Application number: 25213531.4
(22) Date of filing: 05.11.2025
(51) Int. Cl.: B60T 17/00, B01D 53/26, B60T 17/02, F15B 21/048

(54) **PNEUMATIC SYSTEM**

(30) Priority: 06.11.2024 GB 202416370
(71) Applicant: AGCO International GmbH, 8212 Neuhausen am Rheinfall (CH)
(72) Inventor: KLAUS, Michael, 87616 Marktoberdorf (DE); ALBRECHT, Tobias, 87616 Marktoberdorf (DE); BOSL, Markus, 87616 Marktoberdorf (DE)
(74) Representative: AGCO Intellectual Property Department

(57) **Abstract**

A pneumatic system comprises a first compressor and associated first air dryer for supplying dried air to a first set of consumers in a main circuit and a second compressor and associated second air dryer for supplying dried air to at least one further consumer through a subsidiary circuit. A protection valve system is provided in the main circuit between the first air dryer and the first set of consumers. A fluid flow path is provided between the main and subsidiary circuits which is selectively openable or closable by a coupling valve to enable the subsidiary circuit to be supplied with pressurized air from the main circuit or to isolate the main and subsidiary circuits.

## Description

### FIELD

Embodiments of the present disclosure relate generally to pneumatic systems, in particular pneumatic supply systems, especially for industrial or utility vehicles, such as tractors, other agricultural vehicles, construction vehicles and others.

### BACKGROUND

Pneumatic air supply systems for vehicles typically comprise a compressor that provides a compressed air supply to a range of different pneumatic consumers (i.e., system hardware such as pneumatic actuators, pneumatic cylinders and pneumatic motors together with associated actuating valves and reservoirs/accumulators for storing a pressurized air supply for such equipment) on the vehicle and/or on an associated implement attached to or towed by the vehicle. Some consumers may be regarded as primary consumers whose operation is prioritized over other consumers that are regarded as secondary. Primary consumers may be safety critical, such as pneumatic brake systems, for example. Examples of secondary consumers include a pneumatic cab suspension system, pneumatic driver seat suspension system, pneumatic engine brake system and a tire pressure control system (TPCS).

It is known for a TPCS to have two circuits: a supply circuit which supplies air to the tires when being inflated, and a control circuit which is used to actuate valves to control the supply circuit. A TPCS may be used to deflate the tires (e.g. on a tractor) when a vehicle is used in a field as this improves grip and reduces soil compaction and to reinflate the tires to a higher pressure when the vehicle is driven on the road. With this arrangement, it is necessary to reinflate the tires when transitioning from field use to road use. This needs to be done as quickly as possible, hence there is a need for a high flow rate but low-pressure air supply in the TPCS supply circuit whereas the control circuit requires a higher pressure but low flow rate supply.

Air from the compressor is usually passed through an air dryer to discharge humidity from the air before supplying it to the consumers system a vehicle. A multi-circuit protection valve system is often provided between the air dryer and the consumers. The multi-circuit protection valve system is operative to balance the pressure required to be supplied to the primary of consumers and the secondary consumers and/or to cut the supply to any consumer should the consumer or its supply circuit develop a leak. In this way, the integrity of the supply to the remaining consumers is maintained. Furthermore, the multi-circuit protection valve system may be configured to ensure that the supply to the primary consumers is prioritized over the supply to secondary consumers.

Different consumers on a vehicle will often have different requirements in terms of flow rate and air pressure. Most consumers, including safety-critical pneumatic brake circuits, require a relatively low flow rate but high-pressure air supply. However, some consumers require a relatively high flow rate but a lower pressure. This is the case for example with the supply circuit of a TPCS through which air is introduced into the tires. In certain circumstances, meeting the demand of a high flow rate secondary consumer can potentially impact on the ability of the pneumatic system to meet the demands of the primary consumers.

### BRIEF SUMMARY

The scope of this disclosure is defined by the claims.

According to examples in accordance with this disclosure, there is provided a pneumatic system according to claim 1. Further optional features are set out in the claims dependent on claim 1. A vehicle comprising the pneumatic system is also provided.

### BRIEF DESCRIPTION OF THE DRAWINGS

One or more embodiments of this disclosure will now be described, by way of example only, with reference to the accompanying drawings, in which:
FIG. 1 shows a tractor, as one example of a vehicle that can make use of the pneumatic system of this disclosure; and
FIG. 2 shows a pneumatic circuit of this disclosure.

### DETAILED DESCRIPTION

The subject matter of this disclosure will be described with reference to the Figures.

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure provides a pneumatic system comprising a first compressor and associated first air dryer for supplying dried air to a first set of consumers in a main circuit, and a second compressor and associated second air dryer for supplying dried air to at least one further consumer through a subsidiary circuit. A multi-circuit protection valve system is provided in the main circuit between the first air dryer and the first set of consumers, the multi-circuit protection valve system outputting to a series of sub-circuits to supply the consumers of the first set. A fluid flow path is provided between the main circuit and the subsidiary circuit, the fluid flow path including a coupling valve which is controllable to selectively open and close the fluid flow path. The coupling valve can be regulated to open the fluid flow path to allow compressed air to be supplied from the main circuit to the subsidiary circuit when the pressure in the main circuit is at an acceptable level or to close the fluid flow path to isolate the main and subsidiary circuits. This may be desirable for example where the first air dryer is an electronically operated dryer (EOD) which is regenerating. In this way, priority can be given to the consumers in the main circuit over the at least one further consumer in the subsidiary circuit. The consumers in the main circuit will generally include at least one primary consumer. The fluid flow path may connect with the main circuit downstream of the multi-circuit protection valve system and may connect to a sub-circuit supplying a secondary consumer.

Before describing the concept of this disclosure, examples of the type of vehicle in which the pneumatic system may be used will be discussed.

The pneumatic system of this disclosure may be applied to a vehicle alone (having pneumatically powered on-board equipment) or to a vehicle towing or attached to an associated implement. In the latter case, part of the pneumatic system may be in the main vehicle and part of the pneumatic system may be in the associated implement.

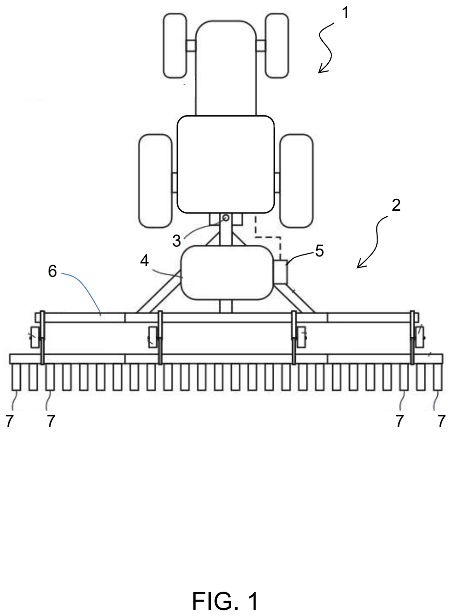

FIG. 1 shows an agricultural tractor 1, as one example of a vehicle that can make use of the pneumatic supply system of this disclosure. The tractor 1 is shown carrying an agricultural implement in the form of a planter 2, as one example of an associated implement. The tractor is coupled to the planter by a hitch 3. The planter comprises a seed tank 4 and a control system 5 which regulates delivery of seed to a number of row units 7 mounted to a tool bar 6.

The pneumatic supply system of this disclosure is not limited to use on tractors or other agricultural vehicles or machines (such as combine harvesters, sprayers and the like) but can be adapted for use with any industrial or utility vehicle requiring a pneumatic air supply, including construction vehicles, trucks and lorries and others. Indeed, the pneumatic system of this disclosure can also be adapted for use in any pneumatic system, whether on a vehicle or not.

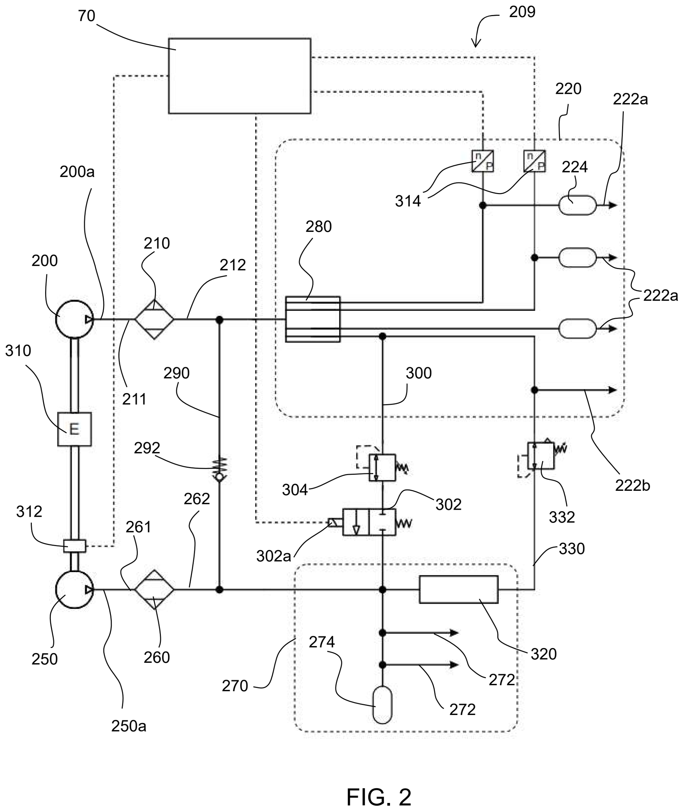

FIG. 2 illustrates an example of a pneumatic system 209 according to the present disclosure.

The pneumatic system 209 comprises a first compressor 200 and a first air dryer 210. The first air dryer has an input 211 coupled to an output 200a of the first compressor 200 and an output 212 coupled to a first set of consumers 222a, 222b in a main circuit 220. Some or all of consumers of the first set may have an associated reservoir or accumulator 224. At least some of the consumers of the first set may be primary consumers 222a whose function is prioritized. The primary consumers may have a safety critical function and might include pneumatic brake systems, for example. However, one or more of the consumers supplied via the main circuit 220 may be secondary consumers 222b.

A multi-circuit protection valve system 280 is provided in the main circuit between the first air dryer 210 and the consumers 222a, 222b of the first set of consumers. The multi-circuit protection valve system 280 outputs to a number of sub-circuits to supply the various consumers 222a, 222b of the first set. In the example shown, there are four sub-circuits. Each sub-circuit may supply more than one consumer. For example, there may be multiple secondary consumers 222b supplied via the same sub-circuit from the multi-circuit protection valve system. The multi-circuit protection valve system 280 is operative to balance the pressure required to be supplied to the primary consumers 222a and the secondary consumers 222b in the main circuit and/or to cut the supply to any of these consumers should the consumer or its associated sub-circuit develop a leak. In this way, the integrity of the supply to the remaining consumers in the main circuit is maintained. Furthermore, the multi-circuit protection valve system may be configured to ensure that the supply to the primary consumers 222a is prioritized over the supply to secondary consumers 222b of the first set. Examples of suitable multi-circuit protection valve systems are disclosed in GB1387892 to Robert Bosch GmbH and GB1563144A to WABCO Westinghouse GmbH.

There is also a second compressor 250 and a second air dryer 260. The second air dryer has an input 261 coupled to an output 250a of the second compressor 250 and an output 262 coupled to at least one further consumer 272 in a subsidiary circuit 270. Typically, the at least one further consumer 272 will be a secondary consumer. In a non-limiting example, FIG. 2 illustrates two further consumers 272 in the subsidiary circuit, one being a supply circuit of a TPCS, the other being an air intake dust discharge used to discharge dust from an air intake filter for an engine of the vehicle and which has an associated reservoir or accumulator 274.

A one-way fluid coupling 290 is provided between the output of the first air dryer 210 and the output of the second air dryer 220. This enables a flow from the second compressor 250 and second air dryer 260 into the main circuit such that both first and second compressors 200, 250 can together supply the first set of consumers 222a, 222b. This one-way coupling is upstream of the multi-circuit protection valve system 280. It enables the second compressor 250 to supply the main circuit if necessary. For example, during start up, both compressors 200, 250 can be used to charge the system and fill the accumulators 224 of the main circuit quickly.

The fluid coupling 290 includes a one-way valve 292 which allows flow only from the subsidiary circuit into the main circuit and opens whenever the pressure at the output of the second air dryer 260 is higher than the pressure in the main circuit. This will arise, for example, during start up if both compressors are actuated and the second compressor 250 is able to charge its associated reservoirs 274 more quickly than the first compressor 200 is able to charge the reservoirs 224 of the main circuit.

The pneumatic system 209 also has a fluid flow path or coupling 300 between the main circuit downstream of the multi-circuit protection valve system 280 and the subsidiary circuit 270. This fluid flow path 300 includes a coupling valve 302 which is electrically controllable by the controller 70. The coupling valve 302 may be an electrically operated solenoid valve and the controller 70 may have an electrical connection to a solenoid 302a of the coupling valve. The coupling valve 302 can be moved to a first configuration in which the flow path 300 is closed (as shown in FIG. 2) and a second configuration in which the flow path 300 is open. This enables the further consumers 272 in the subsidiary circuit 270 to be supplied with air pressure from the main circuit when the flow path is opened or else enables the main circuit to be isolated from the subsidiary circuit when the fluid flow path is closed. Isolation in this context should be understood as meaning that air is not able to flow from the main circuit to the subsidiary circuit or to be drawn from the subsidiary circuit into the main circuit through the fluid flow path 300, for example during regeneration of the first air drier 210. Other coupling valve arrangements that enable the fluid flow path 300 to be selectively opened and closed under control of an electrical controller 70 can be adopted.

The fluid flow path coupling 300 also includes a pressure relief valve 304 in series with the coupling valve 302 configured to close the fluid flow path in the event the pressure level in the main circuit 220 drops below a predetermined value, for example with a pressure setting of 10.5 bar (1.05MPa). This enables the main and secondary circuits to be separated if the pressure level in the main circuit 220 drops below the predetermined value or during regeneration of the first air dryer. Even in the event coupling valve 302 fails in the open position, the pressure relief valve 304 provides additional pneumatic protection for the main circuit 220.

The fluid flow path 300 may be connected to a sub-circuit of the main circuit 220 which supplies a secondary consumer 222b downstream of the multi-circuit protection valve system 280. This ensures that the primary consumers 222a of the main circuit are protected by the multi-circuit protection valve system 280 in the event a fault or leak develops in the flow path 300 or the subsidiary circuit 270 to which it is connected, and the main circuit cannot be isolated by closure of the coupling valve 302 and/or the relief valve 304. However, the fluid flow path 300 could be connected to a sub-circuit supplying one of the primary consumers 222a or connected to the main circuit upstream of the multi-circuit protection valve system 280 provided this does not compromise the safety of the pneumatic supply system or vehicle.

The system 209 thus able to supply consumers, including primary consumers, in a main circuit and consumers in a subsidiary circuit where the main circuit can be isolated from the subsidiary circuit in certain operating conditions. This can be used to separate out supply to consumers having different requirements in terms flow rate and pressure. In an example, the consumers 222a, 222b in the first set supplied via the main circuit are typically consumers that require high pneumatic pressure but low flow rate (such as pneumatic braking systems), whereas consumers 272 supplied mainly through the subsidiary circuit 270 may tend to be consumers that require a higher flow rate but lower pressure, at least under certain operating conditions. Because the second compressor 250 is supplying consumers at a lower pressure, it can achieve a higher flow rate. In a non-limiting example, the first compressor 200 may be configured deliver at a pressure in the region of 8.5 bar (850 kPa) to 12.5 bar (1259 kPa) with an air flow of 200 to 250 I/min at engine idle speed and 400 I/min at nominal engine speed and the second compressor 250 configured to supply air to the subsidiary circuit at a flow rate of 800-1000l/min and a pressure in region of 2.5 bar (250 kPa) to 3 bar (300 kPa).

The fluid flow path 300 between the main and subsidiary circuits enables the first compressor to also supply the further consumers 272 of the subsidiary circuit 270 where the demands of the further consumers 272 can be meet without compromising the air supply to the primary consumers 222a. Generally, the system will try to maintain the reservoirs 224 in the main circuit at a defined pressure level, for example 8.5 bar (850 kPa) to 12.5 bar (1259 kPa), to ensure that they can deliver the required air pressure to the primary consumers 222a when required. In these circumstances only the first compressor 200 needs to be actuated and the second compressor 250 can be idled to save energy. In embodiments, the drive to the second compressor may be switchable, that is to say the drive can be switched on and off so the second compressor is not driven when idle and is only driven where the demands of the further consumers 272 cannot be met safely by the first compressor 200 or when required to quickly charge the system at start up. In this way, the system can be operated using only the first compressor 200, for example if the second compressor 250 is not driven. The first and second compressors 200, 250 may be driven by the same power source 310 which may be an engine of the vehicle. A clutch 312 may be provided between the power source 310 and the second compressor 250 which can be engaged to transmit drive to the second compressor 250 and disengaged to disconnect the second compressor 250 from the power source so that it is not driven. This enables drive to the second compressor 250 to be switched on, activating the second compressor, or switched off, deactivating the second compressor. The clutch 312 is controlled by the controller 70. In other embodiments, the second compressor 250 may be driven by an electric or hydraulic motor whose actuation is controlled by the controller 70 such that the motor can be turned on to drive the second compressor 250 and turned off when the second compressor is not required.

In FIG. 2, the two air dryers 210, 260 are shown schematically simply as air dryer units. The first and second air dryers 210, 260 may be of the same or different types. In one example, the first compressor 200 is a single cylinder compressor and the first air dryer 210 is an Electrically Operated Air Dryer (EOD). Thus, in general terms, the first air dryer comprises an EOD with a single drying chamber having an input coupled to the compressor and an output coupled to the first set of consumers. An example of a pneumatic supply system on a vehicle having an EOD can be found in EP3127721A1 to AGCO International GmbH published 8th February 2017.

The second compressor 250 may be a double cylinder compressor and the second air dryer 260 may be a double chamber air dryer.

In this way, the main circuit 220 (for the first set of consumers) is supplied via a single chamber compressor 200 through an EOD 210, and an additional compressor 250 for high air flow and a double chamber dryer 260 supplies the subsidiary circuit for the at least one further consumer 272. Whilst a double chamber air dryer is often considered suitable for use with higher flow rates as required for example by a supply circuit of a TPCS, an EOD may alternatively be used as the second air dryer 260. Whilst an EOD typically has a lower flow capacity than a double chamber drier, in tests it has been fund that electronic control of the air dryer mitigates the disadvantage of a generally lower air flow capacity by the fact that the electronically control of the regeneration process avoids downtime and overall provides better air supply even for use with a supply circuit of a TCPS.

The coupling valve 302 is also controlled by the controller. The controller receives feedback signals from pressure sensors 314 to help determine when the main circuit should be isolated from the subsidiary circuit by actuating the coupling valve 302 to close the flow path 300. For example, the two circuits are kept separate if the pressure level in the main circuit drops below a minimum target level, or during regeneration of the first air dryer 210 (e.g., where this is an EOD with a single dryer chamber). It is noted that the two pressure sensors measure the same pressure level. By having multiple pressure sensors, fault diagnosis is enabled, for example for leak detection. Alternatively or in addition, a pressure sensor may be used to detect the pressure in the main circuit upstream of the multi-circuit protection valve system 280 and this sensed pressure used to control operation of the coupling valve 302.

FIG. 2 also shows a particular implementation of a TPCS 320 comprising a control circuit with a valve manifold 320 for controlling a supply circuit 272. A valve manifold supply pressure is provided from the main circuit through a line 330 and pressure regulating valve 332, for example with a 5 bar (500kPa) pressure setting. The supply pressure for the TPCS valve manifold 320 may be taken from a sub-circuit which supplies a secondary consumer 222b of the main circuit so that the primary consumers 222a of the main circuit are protected in the event of a leak or fault developing in the TPCS valve manifold 320 circuit.

The TPCS may also control tire pressures on an associated implement attached to the tractor or the subsidiary circuit could be used to supply air to a TPCS of an implement, especially a planter.

An example of a pneumatic supply system on a vehicle having a TPCS with sperate supply and control circuits is described in EP3127721A1 to AGCO International GmbH published 8th February 2017.

By way of example, the first set of consumers 222a, 222b in the main circuit may comprise one or more selected from the following list:
rear service brake;
front service brake;
park brake;
trailer brake.

These braking functions are all safety critical and hence are implemented as primary consumers.

The further consumers of the subsidiary circuit comprise one or more selected from the following list:
a supply circuit of a TPCS;
a cab air supply;
a dust discharge system.

As explained above, this disclosure may be applied to any vehicle having a pneumatic system for supplying consumers (i.e., on-board or external equipment requiring a pneumatic supply such as pneumatic actuators, pneumatic cylinders, pneumatic motors and reservoirs or accumulators for storing a pressurized air supply for such equipment) with pneumatic power. The vehicle may be an agricultural vehicle, such as a tractor, or other type of commercial vehicle. The pneumatic system may also have non-vehicle applications.

The multi-circuit protection valve system comprises multiple circuits, e.g. four circuits. Different circuits may operate at different pressures and may be associated with their own reservoirs. For example, a number of primary consumers 222a, such as the rear service brake, front service brake, park/trailer brake, may each be supplied by a separate circuit. The fourth circuit may then supply a secondary consumer 222b.

Within the scope of this disclosure, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

Variations to the disclosed embodiments can be understood and effected by those skilled in the art in practicing the subject matter of this disclosure, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

Any reference signs in the claims should not be construed as limiting the scope.

All references cited herein are incorporated herein in their entireties. If there is a conflict between definitions herein and in an incorporated reference, the definition herein shall control.

## Claims

1. A pneumatic system, comprising:
a first compressor (200);
a first air dryer (210) having an input (211) coupled to an output (200a) of the first compressor and an output (212) coupled to a first set of consumers (222a, 222b) in a main circuit (220), the main circuit (220) having a multi-circuit protection valve system (280) downstream of the first air dryer (210) which outputs to a number of sub-circuits to supply the consumers (222a, 222b) of the first set (220) of consumers;
a second compressor (250);
a second air dryer (260) having an input (261) coupled to an output (250a) of the second compressor and an output (262) coupled to at least one further consumer in a subsidiary circuit (270);
and
a fluid flow path (300) between the main circuit (220) and the subsidiary circuit (270), the fluid flow path (300) including a coupling valve (302) which is controllable to selectively open and close the fluid flow path.

2. The pneumatic system of claim 1, wherein the fluid flow path (30) is connected to the main circuit downstream of the multi-circuit protection valve system (280).

3. The pneumatic system of claim 1 or claim 2, further comprising a one-way fluid coupling (290) between the main circuit (220) upstream of the protection valve system (208) and the output of the second air dryer (260), enabling flow from the second air dryer to the main circuit 220 such that, in use, the first and second compressors can together supply the first set of consumers (220).

4. The pneumatic system of any one of claims 1 to 3, wherein the coupling valve (302) is an electrically controlled valve.

5. The pneumatic system of any one of claims 1 to 4, wherein the fluid flow path comprises a pressure relief valve (304) in series with the coupling valve (302).

6. The pneumatic system of any one of claims 1 to 5, wherein the first compressor (200) is a single cylinder compressor.

7. The pneumatic system of any one of claims 1 to 6, wherein the first air dryer is an electrically operated air dryer.

8. The pneumatic system of claim 7, wherein the first air dryer (210) comprises an electrically operated single chamber air dryer having an input coupled to the first compressor and an output coupled to the first set of consumers through the main circuit, the air dryer comprising a dryer unit and a regeneration system.

9. The pneumatic system of any one of claims 1 to 8, wherein the second compressor (250) is a double cylinder compressor.

10. The pneumatic system of any one of claims 1 to 9, wherein the second air dryer (260) is a double chamber air dryer or an electrically operated air dryer.

11. The pneumatic system of any one of claims 1 to 10, wherein the first and second compressors are driven by the same power source (310), and wherein the system comprises a clutch (312) between the power source and the second compressor.

12. The pneumatic system of any one of claims 1 to 11, wherein the at least one further consumer requires a higher air flow rate in at least some operating conditions than the consumers of the first set.

13. The pneumatic supply system of any one of claims 1 to 12, where the at least one further consumer comprises an air supply circuit of a tire pressure control system.

14. A vehicle comprising:
the pneumatic system of any one of claims 1 to 13; and
the consumers (222a, 222b, 272) that are supplied by the pneumatic system.

15. The vehicle of claim 14, wherein the first set of consumers comprises one or more selected from the following list:
rear service brake;
front service brake;
park brake;
trailer brake.

16. The vehicle of claim 14 or 15, wherein the at least one further consumer comprises one or more selected from the following list:
tire pressure control system (320);
cab air supply;
dust discharge system.

17. The vehicle of claim 16, wherein the at least one further consumer comprises a tire pressure control system (320) having a supply circuit through which air is provided to at least one tire of the vehicle and a control circuit having a valve manifold for controlling the supply circuit, and wherein a valve manifold supply pressure (330) is provided from the main circuit, through a pressure regulating valve (332).
